# EUROPÄISCHE PATENTSCHRIFT

(11) **EP 3 838 372 B1**
(45) Veröffentlichungstag und Bekanntmachung des Hinweises auf die Patenterteilung: **08.11.2023**
(21) Anmeldenummer: 20197718.8
(22) Anmeldetag: 23.09.2020
(51) Int. Cl.: B01D 29/15, B01D 29/90, B01D 29/92

(54) **FILTERVORRICHTUNG**
FILTER DEVICE
DISPOSITIF FILTRANT

(30) Priorität: 17.12.2019 DE 102019008741
(43) Veröffentlichungstag der Anmeldung: 23.06.2021
(73) Patentinhaber: Hydac Filtertechnik GmbH, 66280 Sulzbach/Saar (DE)
(72) Erfinder: Maurer, Patrick, 66280 Sulzbach (DE)
(74) Vertreter: Bartels und Partner, Patentanwälte

(56) Entgegenhaltungen:
- EP-A1- 2 913 090
- WO-A2-2005/063358
- DE-A1- 3 032 846
- DE-U1-202015 009 725
- GB-A- 2 408 223

## Beschreibung

Die Erfindung betrifft eine Filtervorrichtung mit einem Filtergehäuse mit den Merkmalen im Oberbegriff von Anspruch 1.

Aus DE 10 2013 022 114 B4 ist eine Filtervorrichtung mit einem Filtergehäuse bekannt, das mit einer Anschlussstelle für die Zufuhr eines Unfiltratstroms und einer weiteren Anschlussstelle für die Abfuhr eines Filtratstroms versehen ist, und mit einem ein Filtermaterial aufweisenden Filterelement, das zur Filtration des Unfiltratstroms von Partikelverschmutzungen zwischen die beiden jeweiligen Anschlussstellen geschaltet und im Filtergehäuse aufgenommen ist. Ferner weist die bekannte Lösung eine Strömungsleiteinrichtung auf im Bereich der Anschlussstelle für die Zufuhr des Unfiltratstroms, welche eine stegartige Barriere ausbildet und über Strömungsleitflächen verfügt, die den über die Anschlussstelle eintretenden Unfiltratstrom in Richtung des Filtermaterials umlenkt, so dass eine besonders homogene Fluidverteilung über die Filterfläche des Filtermaterials erreicht ist. Die stegartige Barriere ist einstückiger Bestandteil einer Filterelement-Endkappe, die auf ihrer der Barriere zugewandten Oberseite eine eine Mittenöffnung für Filtrat umgebende, vom Zuströmraum mit dem Unfiltrat weg geneigt verlaufende, weitere Strömungsleitfläche bildet, vorzugsweise in Form einer Kegelfläche. Insoweit weist die genannte Endkappe, die mit dem Elementmaterial des Filterelements stirnseitig fest verklebt ist, zusammen mit der Barriere eine Strömungsleiteinrichtung mit entsprechender Strömungsführung nur für den Unfiltratstrom auf.

Während die Zufuhr des Unfiltrats über einen geradlinig verlaufenden Zutrittskanal im Filterkopf der Filtervorrichtung erfolgt, ist in demselben ein gebogen verlaufender Austrittskanal für die Abfuhr des Filtrats vorgesehen, der mit seinem einen Ende in die Mittenöffnung der oberen Endkappe des Filterelements mit der Strömungsleiteinrichtung ausmündet, das in einem topfartigen Filtergehäuseteil aufgenommen eine Austauschmöglichkeit für das Filterelement vorsieht, indem man den Filtertopf von dem Filterkopf abschraubt.

Das Herstellen von in Filterköpfen gebogen verlaufenden Fluidkanälen ist sehr aufwendig und kostenintensiv und dem Grund nach ist für jede Filtervorrichtungslösung ein eigener Filterkopf zu schaffen mit definiert vorgegebenen, freien Kanalquerschnitten, wobei es im Stand der Technik eine Vielzahl von Elementlösungen gibt, die auch auf der Zufuhrseite des Unfiltratstroms über gebogen verlaufende Zutrittskanäle im Filterkopf verfügen.

Die EP 2 913 090 A1 beschreibt eine Filtervorrichtung mit einem Filtergehäuse, das eine Anschlussstelle für die Zufuhr eines Unfiltratstroms und eine weitere Anschlussstelle für die Abfuhr eines Filtratstroms aufweist, mit einem ein Filtermaterial aufweisenden, hohlzylindrischen Filterelement, das zur Filtration des Unfiltratstroms zwischen die jeweiligen Anschlussstellen geschaltet ist, und mit einer Strömungsleiteinrichtung für das Führen des Unfiltratstroms innerhalb des Filtergehäuses, wobei die Strömungsleiteinrichtung auch dem Führen des Filtratstroms im Filtergehäuse dient und eine Trennwand aufweist, die mit ihren einander gegenüberliegenden Wandseiten unter Anströmung derselben dahingehend einmal den Unfiltrat- und einmal den Filtratstrom getrennt voneinander führt, und die von einem Fluidkanal durchgriffen ist, der endseitig einmal in das Innere des Filterelements und einmal in Richtung einer der beiden Anschlussstellen ausmündet, wobei die Strömungsleiteinrichtung in einen Filterkopf als eigenständiges Bauteil eingesetzt ist, der mit einem Filtertopf mit dem austauschbaren Filterelement in wieder lösbarer Weise verbunden ist, wobei die Fluidanschlussstellen im Filterkopf des Filtergehäuses angeordnet, umlenkungsfrei in einen jeweils zuordenbaren Strömungsraum einmünden, die von der Strömungsleiteinrichtung räumlich voneinander separiert sind, und wobei das Filterelement tauschbar in dem Filtertopf des Filtergehäuses aufgenommen ist, der in der Art eines abnehmbaren Deckelteils von dem Filterkopf verschlossen ist.

Weitere Filtervorrichtungen gehen aus der DE 20 2015 009 725 U1, der WO 2005/063358 A2, der DE 30 32 846 A1 und der GB 2 408 223 A hervor.

Der Erfindung liegt die Aufgabe zugrunde, eine demgegenüber verbesserte Filtervorrichtung zu schaffen.

Eine dahingehende Aufgabe löst eine Filtervorrichtung mit den Merkmalen des Patentanspruchs 1 in seiner Gesamtheit.

Gemäß dem Kennzeichen von Anspruch 1 ist vorgesehen, dass der Fluidkanal eine hohlzylindrische Kanalhülse aufweist, die einstückiger Bestandteil der Trennwand ist, die zusätzlich eine hohlzylindrische Festlegehülse aufweist, mittels der die Trennwand an Deckelteilen des Filterkopfes festlegbar ist, in die die Festlegehülse eingreift; und dass eine Spaltöffnung den Fluidkanal mit einem der Strömungsräume verbindet und als keilförmiger Ausschnitt der Festlegehülse ausgebildet ist. Hierdurch ist insgesamt eine Strömungsführung erreicht, die mit kontinuierlichem Druckabbau in Richtung der Filtratabgabeseite eine hemmnisfreie Filtration ermöglicht.

Dadurch, dass die Strömungsleiteinrichtung auch dem Führen des Filtratstroms im Filtergehäuse dient und eine Trennwand aufweist, die mit ihren einander gegenüberliegenden Wandseiten unter Anströmung derselben dahingehend einmal den Unfiltrat- und einmal den Filtratstrom voneinander getrennt führt, und die von einem Fluidkanal durchgriffen ist, der endseitig einmal in das Innere des Filterelements und einmal in Richtung einer der beiden Anschlussstellen ausmündet, kann auf die kompliziert zu verwirklichenden, bogenförmig verlaufenden Fluidkanäle im Filterkopf verzichtet und diese durch Kanäle in geradlinig verlaufender Bauweise ersetzt werden, was insgesamt den Aufwand und die Herstellkosten für die gesamte Filtervorrichtungslösung gering hält. Durch den Einsatz der erfindungsgemäßen Strömungsleiteinrichtung sind Druckverluste beim Zu- und Abführen des Unfiltrat- bzw. des Filtratstroms durch Turbulenz sowie damit einhergehende, das Material schädigende Kavitationserscheinungen vermieden und ein energetisch günstiger Betrieb bei der Partikelabreinigung mittels des Filterelements erreicht, wozu mit beiträgt, dass aufgrund des Einsatzes der Strömungsleiteinrichtung der Zu- und Ablauf von Fluid zu bzw. von der Strömungsleiteinrichtung weg durch geradlinig verlaufende Kanäle im Filterkopf erfolgen kann. Dank der Strömungsleiteinrichtung besteht auch grundsätzlich die Möglichkeit, Filtrat- und Unfiltratseite vonseiten des Fluiddurchflusses umzudrehen, was die Einsatzmöglichkeiten weiter erhöht. Sollte sich dabei das Filterelement ungewollt aufblähen, kann mittels einer Stützeinrichtung, wie einem zusätzlichen Stützgitter, der dahingehenden Tendenz entgegengewirkt werden.

Da die Strömungsleiteinrichtung mit geringem, baulichem Aufwand an nahezu beliebige freie Kanalquerschnitte auf der Zu- und Abströmseite der Filtervorrichtung angepasst werden kann, lässt sich mit nur einem Leiteinrichtungskonzept eine Vielzahl von Filtrationsaufgaben mit unterschiedlich konzipierten Filtervorrichtungslösungen realisieren. Auch insoweit lässt sich die weitgehend standardisierte Strömungsleiteinrichtung in kostengünstiger Weise aufbauen, so dass sich in Verbindung mit den sonstigen Komponenten einer Filtervorrichtung eine Art modularer Baukasten für die einzelnen Komponenten ergibt.

Die Strömungsleiteinrichtung ist in einen Filterkopf als eigenständiges Bauteil eingesetzt, der mit einem Filtertopf mit dem austauschbaren Filterelement in wieder lösbarer Weise verbindbar ist. Dergestalt lässt sich der Filterkopf, der regelmäßig im Rahmen eines Gussverfahrens hergestellt ist, von seinem prinzipiellen Aufbau her vereinfachen und kommt insbesondere ohne formtechnisch kompliziert gebogene Zu- und Abfuhrkanäle aus, da die eigentliche Strömungsleitung im Filterkopf über das eigenständige Bauteil generiert ist, dessen Herstellung beispielsweise im Rahmen einer üblichen spanenden Verarbeitung in standardisierbarer Weise deutlich vereinfacht ist.

Bei einem weiteren bevorzugten Ausführungsbeispiel ist vorgesehen, dass gegenüber der Strömungsrichtung in der jeweiligen Anschlussstelle die Trennwand in der Art einer schiefen Ebene schräg geneigt ist, die mit ihren beiden einander gegenüberliegenden Wandteilen, in der vertikalen Betriebsstellung gesehen, einmal von der Unterseite und einmal von der Oberseite her angeströmt ist. Aufgrund der dahingehenden Ausrichtung der Trennwand sowie einer Fluidanströmung in mehr oder minder druckausgeglichener Weise auf gegenüberliegenden Seiten der Trennwand ist eine kräftefreie Aufnahme der Strömungsleiteinrichtung im Filterkopf ermöglicht.

Die Fluidanschlussstellen münden, im Filterkopf des Filtergehäuses angeordnet, umlenkungsfrei in den jeweils zuordenbaren Strömungsraum ein, die von der Strömungsleiteinrichtung räumlich voneinander separiert sind, und dass das Filterelement tauschbar in einem Filtertopf des Filtergehäuses aufgenommen ist, der in der Art eines abnehmbaren Deckelteils von dem Filterkopf verschlossen ist. Dergestalt ist eine turbulenz- und kavitationsfreie Anströmung des Filterelements erreicht, das von Partikelverschmutzung verunreinigt sich leicht gegen ein Neuelement tauschen lässt. Insbesondere ist vorgesehen, dass die den Fluidanschlussstellen zugeordneten Kanäle für Unfiltrat und Filtrat im Filterkopf mit ihren Längsachsen in einer Linie liegen, so dass im Wesentlichen mit nur einem Bearbeitungsschritt, wie Bohren, die Kanalführung im Filterkopf erhalten ist, was wiederum die Herstellkosten senkt.

Bei einem weiteren bevorzugten Ausführungsbeispiel ist vorgesehen, dass die schräggestellte Trennwand an ihrem Außenumfang eine Dichtung trägt, die, in der vertikalen Betriebsstellung gesehen, einmal oberhalb der einen Anschlussstelle und einmal unterhalb der anderen Anschlussstelle verläuft. Durch die vollumfängliche Anordnung der Dichtung zwischen der Außenumfangsseite der Trennwand und der Gehäuseinnenseite des Filterkopfs ist eine besonders gute Dichtwirkung zwischen dem Unfiltrat- und dem Filtratstrom erzielbar, die aufgrund der kräftefrei gehaltenen Schrägstellung der Trennwand nur in geringem Umfang beansprucht ist.

Bei einem weiteren bevorzugten Ausführungsbeispiel ist vorgesehen, dass die Anschlussstellen in einer gemeinsamen Ebene im Filterkopf verlaufen und quer zum Fluidkanal der Trennwand. Eine derartige Anordnung, insbesondere bei schräggestellter Einbaulage der Trennwand, führt zu einer nahezu senkrechten Fluidführung zum Filterelement hin und von diesem weg und mithin zu einer Verkürzung der Strömungswege bezogen auf das Filterelement, was sich im Betrieb als energetisch günstig erweist.

Ferner ist vorzugsweise vorgesehen, dass die Trennwand die Festlegehülse als einstückigen Bestandteil aufweist.

Bei einem weiteren bevorzugten Ausführungsbeispiel ist vorgesehen, dass die Strömungsleiteinrichtung zusätzliche Festlegemittel für eine Anbindung an das Kopfteil aufweist und/oder Teile für eine Differenzdruckmessung, wie mindestens einen Messkanal, aufweist. Hierdurch ist die Strömungsleiteinrichtung funktionssicher festgelegt und der Messkanal erlaubt von außen her mit geringem, apparatetechnischem Aufwand eine Differenzdruckmessung am Filterelement, um dessen Beladung mit Partikelverschmutzung feststellen zu können. Da die Strömungsleiteinrichtung als massives Bauteil konzipiert werden kann, ist sie insoweit gegen abrasive Vorgänge im Rahmen der Fluidstromführung gewappnet.

Im Folgenden wird die erfindungsgemäße Filtervorrichtung anhand der Zeichnung näher erläutert. Dabei zeigen in prinzipieller und nicht maßgeblicher Darstellung
- Fig. 1: in der Art einer Explosionsdarstellung die erfindungsgemäße Filtervorrichtung mit ihren einzelnen Funktionskomponenten Filterkopf, Strömungsleiteinrichtung und Filtertopf;
- Fig. 2: einen Längsschnitt der Filtervorrichtung nach der Fig. 1; und
- Fig. 3: eine perspektivische Schrägansicht auf die Strömungsleiteinrichtung nach Fig. 1 und 2.

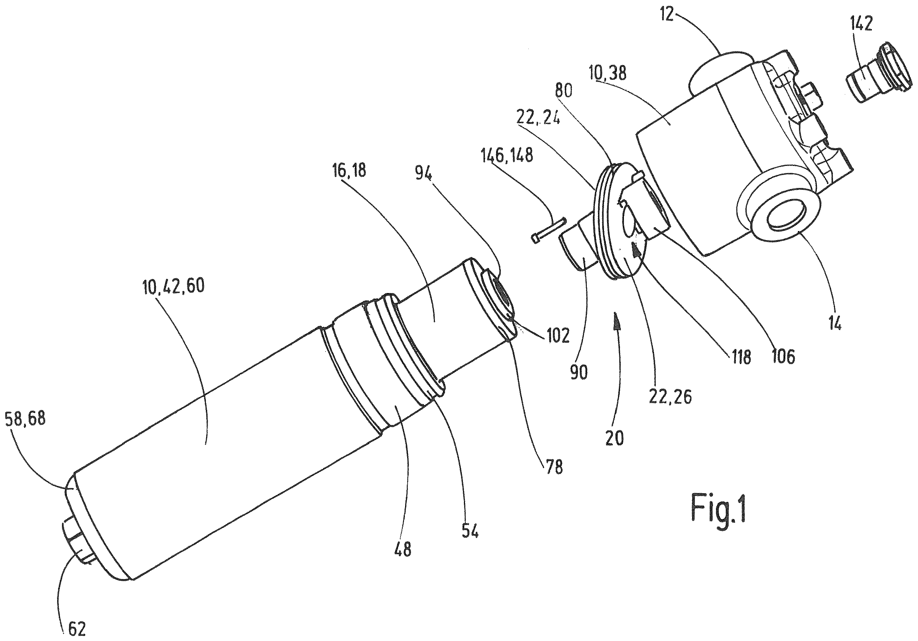

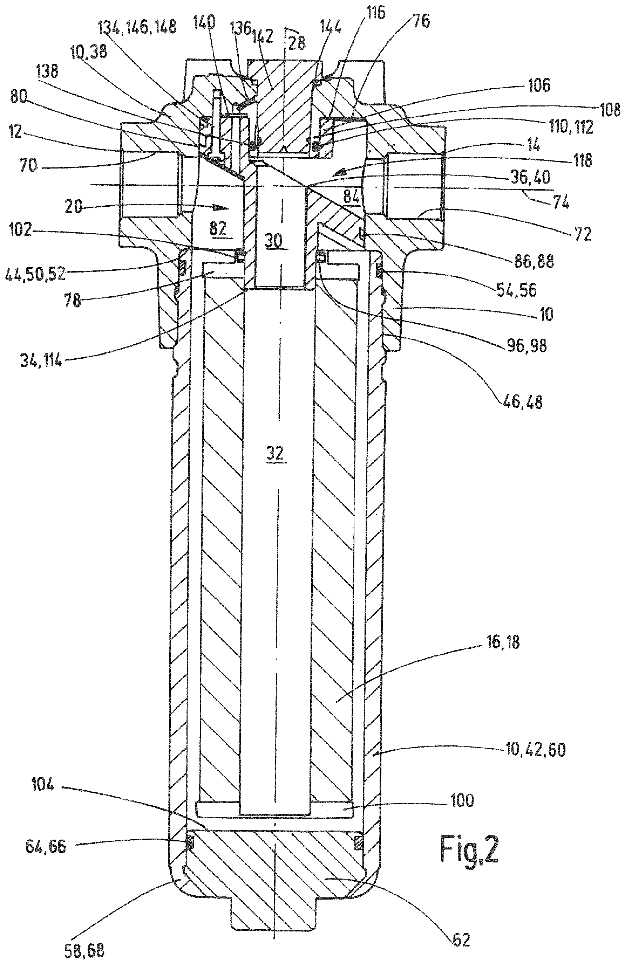

Fig. 1 und 2 zeigen eine erfindungsgemäße Filtervorrichtung mit einem Filtergehäuse 10, das eine Anschlussstelle 12 für die Zufuhr eines Unfiltratstroms und eine weitere Anschlussstelle 14 für die Abfuhr eines Filtratstroms aufweist. In dem Filtergehäuse 10 ist ein hohlzylindrisches Filterelement 16 derart angeordnet, dass dessen Filtermaterial 18 zwecks Partikelabreinigung von einem Fluidstrom durchströmt wird, der durch das Filtergehäuse 10 zwischen der Anschlussstelle 12 und der weiteren Anschlussstelle 14 strömt.

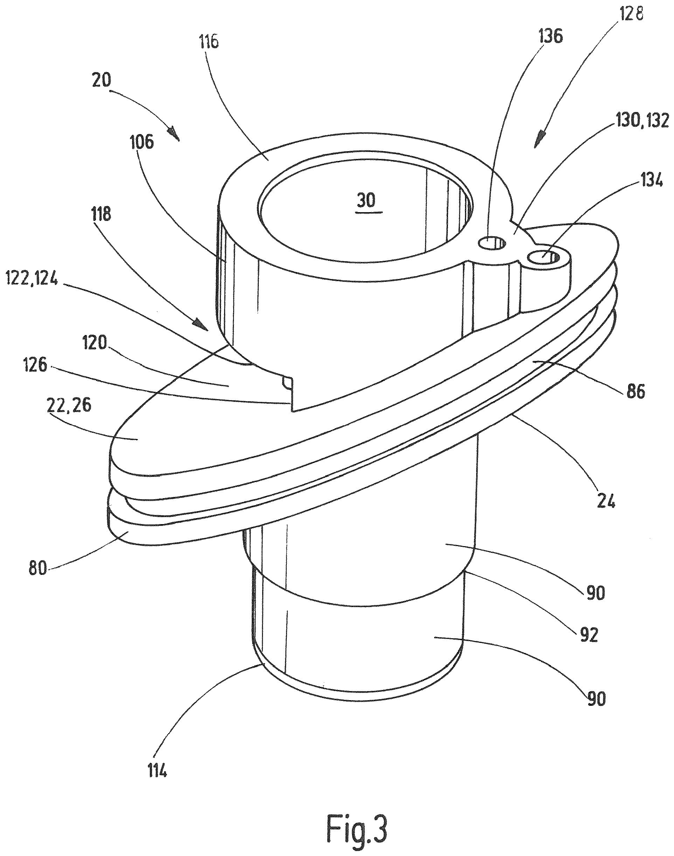

In dem Filtergehäuse 10 ist eine Strömungsleiteinrichtung 20 (Fig. 3) vorgesehen, die zum Führen des Unfiltrat- und des Filtratstroms im Filtergehäuse 10 dient. Die Strömungsleiteinrichtung 20 weist eine Trennwand 22 auf, die mit ihren aneinander gegenüberliegenden Wandseiten 24, 26 unter Anströmung derselben den Unfiltrat- und den Filtratstrom getrennt voneinander führt.

Durch die Trennwand 22 erstreckt sich in Richtung einer Längsachse 28 der Filtervorrichtung ein zentraler Fluidkanal 30. Das dem Filterelement 16 zugewandte eine Ende 34 des Fluidkanals 30 mündet in einen zylindrischen Hohlraum 32 des Filterelements 16 aus und das andere Ende 36 ist durch eine einem Filtergehäusekopf 38 zugewandte zentrale Öffnung 40 der Trennwand 22 gebildet, die mit der weiteren Anschlussstelle 14 fluidführend verbunden ist.

Das Filtergehäuse 10 weist einen zylindrischen Filtergehäusetopf 42 und den mit dem Filtergehäusetopf 42 in wiederlösbarer Weise verbindbaren Filtergehäusekopf 38 in der Art eines abnehmbaren Deckelteils auf. Das zylindrische Filterelement 16 ist austauschbar in dem Filtergehäusetopf 42 angeordnet.

Der Filtergehäusekopf 38 weist an seinem dem Filtergehäusetopf 42 zugewandten Endbereich unter Ausbildung einer Stufe 44 eine Erweiterung seines Innendurchmessers auf. Zum Verbinden des Filtergehäusekopfs 38 mit dem Filtergehäusetopf 42 weist der Filtergehäusekopf 38 im Bereich der Erweiterung seines Innendurchmessers eine Innengewindestrecke 46 zum Verbinden mit einer korrespondierenden Außengewindestrecke 48 auf, die an dem dem Filtergehäusekopf 38 zugewandten Endbereich des Außenumfangs des Filtergehäusetopfs 42 vorgesehen ist. Sind Filtergehäusekopf 38 und Filtergehäusetopf 42 miteinander verbunden, gelangt das stirnseitige Ende 50 des Filtergehäusetopfs 42 in Anlage mit der Stufe 44 des Filtergehäusekopfs 38.

In dem Filtergehäusetopf 42 ist an seinem Außenumfang im Bereich zwischen der Gewindestrecke 48 und einem offenen Ende 52 des Filtergehäusetopfs 42 eine Ringnut 54 vorgesehen, in der ein Dichtring 56 zur Abdichtung des Filtergehäusetopfs 42 gegenüber dem Filtergehäusekopf 38 aufnehmbar ist.

In ein dem Filtergehäusekopf 38 abgewandten Ende 58 eines zylindrischen Gehäuseteils 60 des Filtergehäusetopfs 42 ist ein Einsatz 62 als Teil des Filtergehäusetopfs 42 eingesetzt, in den eine umfängliche Ringnut 64 eingebracht ist, in der ein Dichtring 66 zur Abdichtung des Einsatzes 62 gegenüber dem zylindrischen Gehäuseteil 60 des Filtergehäusetopfs 42 aufnehmbar ist. Der Einsatz 62 ist in dem zylindrischen Gehäuseteil 60 mittels einer endseitigen, umfänglichen Umbördelung 68 des zylindrischen Gehäuseteils 60 festgelegt.

Ausgehend von der Anschlussstelle 12 für die Zufuhr des Unfiltratstroms und ausgehend von der weiteren Anschlussstelle 14 für die Abfuhr des Filtratstroms erstreckt sich jeweils ein zylindrischer Fluidkanal 70, 72 radial durch den Filtergehäusekopf 38. Dadurch ist die Strömungsrichtung des Fluids durch die jeweilige Anschlussstelle 12, 14 im Wesentlichen senkrecht zu der Längsachse 28 des Filtergehäuses 10 ausgerichtet. Die Längsachse 28 des Filtergehäuses 10 entspricht der Längsachse des Filtergehäusekopfs 38, der Strömungsleiteinrichtung 20, des Filtergehäusetopfs 42 und des Filterelements 16. Die Fluidkanäle 70, 72 der Anschlussstellen 12, 14 sind derart einander gegenüberliegend im Filtergehäusekopf 38 ausgebildet, dass diese eine gemeinsame, durch ihre Mitten verlaufende, zentrale Achse 74 aufweisen.

In den Filtergehäusekopf 38 ist zwischen einem Boden 76 des Filtergehäusekopfs 38 und dem Filterelement 16 die Strömungsleiteinrichtung 20 als eigenständiges Bauteil eingesetzt. Alternativ kann die Strömungsleiteinrichtung 20 mit dem Filtergehäusekopf 38 fest verbunden oder Teil des Filterelements 16 sein, beispielsweise integraler Bestandteil einer dem Filtergehäusekopf 38 zugewandten Endkappe 78 des Filterelements 16 (nicht dargestellt).

Die Trennwand 22 der Strömungsleiteinrichtung 20 ist gegenüber der Längsachse 28 der Filtervorrichtung und gegenüber der Strömungsrichtung des Fluids durch den jeweiligen Fluidkanal 70, 72 der Anschlussstellen 12, 14 schräg geneigt angeordnet. So weist die Trennwand 22 zwei zueinander parallel ausgerichtete, elliptische Wandflächen 24, 26 auf, die jeweils zwischen sich und der Längsachse 28 der Filtervorrichtung einen Winkel von ca. 60 Grad einschließen. Eine Projektion der jeweiligen Wandfläche 24, 26 in Richtung der Längsachse 28 der Filtervorrichtung auf eine fiktive erste Ebene, die die Längsachse 28 der Filtervorrichtung als Normale aufweist, ist ein Kreis.

Die Strömungsleiteinrichtung 20 ist in ihrer Funktionsposition derart im Filtergehäusekopf 38 angeordnet, dass, in Richtung der Längsachse 28 der Filtervorrichtung gesehen, eine Umfangsseite 80 der Trennwand 22 im Bereich der Anschlussstelle 12 zwischen dem Boden 76 des Filtergehäusekopfs 38 und der Anschlussstelle 12 sowie im Bereich der weiteren Anschlussstelle 14 zwischen der Stufe 44 des Filtergehäusekopfs 38 und der weiteren Anschlussstelle 14 angeordnet ist. Die Umfangsseitenfläche 80 der Trennwand 22 ist koaxial zur Längsachse 28 der Filtervorrichtung ausgerichtet.

Durch die dahingehende Anordnung separiert die Strömungsleiteinrichtung 20 einen im Filtergehäusekopf 38 angeordneten Strömungsraum 82, der durch die eine Wandfläche 24 der Trennwand 22 mitbegrenzt ist, von einem weiteren im Filtergehäusekopf 38 angeordneten Strömungsraum 84, der durch die andere Wandfläche 26 der Trennwand 22 mitbegrenzt ist. In den Strömungsraum 82 mündet der Fluidkanal 70 der Anschlussstelle 12 umlenkungsfrei aus und in den weiteren Strömungsraum 84 mündet der weitere Fluidkanal 72 der weiteren Anschlussstelle 14 umlenkungsfrei aus. Die Trennwand 22 wird in dem Strömungsraum 82 auf ihrer einen Wandfläche 24 von dem den Fluidkanal 70 der Anschlussstelle 12 durchströmenden Fluid und in dem weiteren Strömungsraum 84 auf ihrer anderen Wandfläche 26 von dem den weiteren Fluidkanal 72 der weiteren Anschlussstelle 14 durchströmenden Fluid angeströmt.

Entlang ihres Außenumfangs 80 ist in die Trennwand 22 eine Ringnut 86 eingebracht, in der eine ringförmige Dichtung 88 angeordnet ist, die in der Funktionsposition der Strömungsleiteinrichtung 20 an der Innenwand des Filtergehäusekopfs 38 anliegend den Unfiltrat- gegenüber dem Filtratstrom abdichtet.

Der zentrale Fluidkanal 30 der Trennwand 22 verläuft durch eine hohlzylindrische Kanalhülse 90, die sich als einstückiger Bestandteil der Trennwand 22 von ihrer einen Wandfläche 24 in Richtung der Längsachse 28 der Filtervorrichtung wegerstreckt. In Richtung des freien Endes 114 der Kanalhülse 90 nimmt ihr Außendurchmesser unter Ausbildung einer Stufe 92 ab. Der jeweilige Außendurchmesser der Kanalhülse 90 ist konstant. Mit ihrer Stufe 92 ist die Kanalhülse 90 in Anlage mit einer Endkappe 78 des Filterelements 16, durch deren zentrale Öffnung 94 sich die Kanalhülse 90 in den zylindrischen Hohlraum 32 des Filterelements 16 hinein erstreckt. Zur Abdichtung des Filterelements 16 gegenüber der Kanalhülse 90 ist an dem Innenumfang der Endkappe 78 eine umfängliche Ringnut 96 vorgesehen, in der ein Dichtring 98 aufnehmbar ist.

Die Anschlussstellen 12, 14 des Filterkopfes 38 sind fluidführend mit nicht dargestellten starren Fluidleitungen einer hydraulischen Anlage verbunden, so dass für einen Filterelementwechsel der Filtertopf 42 vom Filterkopf 38 abzuschrauben ist. Aufgrund des modularen Aufbaus der Filtervorrichtung lassen sich dann Filtertöpfe 42 mit unterschiedlicher axialer Erstreckung nebst zugehörigen Neu-Filterelementen in den im Rahmen der Anlage stationär angeordneten Filterkopf 38 einwechseln. Insbesondere lassen sich dergestalt Filterelemente 16, die aufgrund ihrer unterschiedlichen Baulänge unterschiedliche Filterleistungen mit sich bringen, in nur einen Kopf 38 mit nur einer Art Strömungsleiteinrichtung 20 einwechseln, was zu deutlichen Kostenersparnissen führen kann.

Wie insbesondere die Fig. 2 zeigt, ist das Filterelement 16 endseitig mit zwei Endkappen 78, 100 versehen, zwischen denen sich das eigentliche filtrierende Elementmaterial 18 erstreckt. Ferner weist in Blickrichtung auf die Fig. 2 gesehen, das untere Ende des Filterelementes 16 einen axialen Abstand zu dem Abschlussteil 62 respektive der Abschlusskappe als Teil des Filtergehäuses 10 auf. Dergestalt ist Spielraum geschaffen, um einen Toleranzausgleich für eine Art von Filterelement-Baulänge zu erreichen. Um trotz dieses Spieles eine sichere Festlegung des Filterelementes 16 an der Strömungsleiteinrichtung 20 zu erreichen, greift die genannte Kanalhülse 90 in den Innenraum 32 des Filterelementes 16 ein und ein nach oben hin vorspringender Absatz 102 der oberen Endkappe 78, der das Dichtelement 98 trägt, ist in führender Anlage mit der abgesetzten Stufe 92 auf der Außenseite der Kanalhülse 90, die in diesem Bereich derart lang ausgebildet ist, dass auch bei einer Anlage der unteren Endkappe 100 an dem Gehäuseboden 104 die obere Elementkappe 78 noch in abgedichteter Weise an der Kanalhülse 90 längsgeführt ist. Wird für einen Elementwechsel die hydraulische Anlage außer Betrieb genommen und der Filtertopf 42 vom Filterkopf 38 für einen Elementtausch abgeschraubt, gleitet die obere Elementkappe 78 mit ihrem Dichtring 98 elastisch nachgiebig auf der Außenseite der Strömungsleiteinrichtung 20 nach unten hin ab bis das Element 16 anschließend auf dem unteren Gehäuseboden 104 aufsetzt und die Kanalhülse 90 das Element 16 dann vollständig freigibt. Jedenfalls ist die Länge des Stücks der Kanalhülse 90, das in Eingriff mit dem Filterelement 16 ist, immer länger als der Abstand zwischen der unteren Endkappe 100 und dem Gehäuseboden 104. Dergestalt ist auch zusätzliche Sicherheit geschaffen, um bei einem Elementtausch zu vermeiden, dass ungewollt Unfiltratanteile auf die Filtratseite der Vorrichtung gelangen.

Von der anderen Wandfläche 26 der Trennwand ausgehend erstreckt sich als einstückiger Bestandteil der Trennwand 22 in Richtung der Längsachse 28 der Filtervorrichtung eine hohlzylindrische Festlegehülse 106 zum Eingreifen eines zylindrischen Hohlstutzens 108 des Filtergehäusekopfes 38 von der Trennwand 22 weg. Der Hohlstutzen 108 erstreckt sich von der Innenseite des Bodens 76 des Filtergehäusekopfes 38 in Richtung der Längsachse 28 der Filtervorrichtung in den Innenraum des Filtergehäusekopfes 38 hinein. Zur Abdichtung des Hohlstutzens 108 gegenüber der Festlegehülse 106 ist außenumfangsseitig an dem Hohlstutzen 108 eine umfängliche Ringnut 110 vorgesehen, in der ein Dichtring 112 aufnehmbar ist.

Der jeweilige Außendurchmesser der Kanalhülse 90 ist kleiner als der Außendurchmesser der Festlegehülse 106, deren Innendurchmesser größer ist als der konstant gehaltene Innendurchmesser der Kanalhülse 90.

Eine freie Stirnseite 114 der Kanalhülse 90 ist parallel zu einer freien Stirnseite 116 der Festlegehülse 106 ausgerichtet, die jeweils senkrecht zu der Längsachse 28 der Filtervorrichtung ausgerichtet sind.

Eine zweite Ebene entspricht der in Fig. 2 dargestellten Schnittebene. In der zweiten Ebene liegen die Längsachse 28 der Filtervorrichtung und die zentrale Achse 74 der Anschlussstellen 12, 14, die sich senkrecht schneiden.

Eine Spaltöffnung 118 verbindet den Fluidkanal 30 der Strömungsleiteinrichtung 20 mit dem weiteren Strömungsraum 84 und ist als keilförmiger Ausschnitt der zylindrischen Festlegehülse 106 ausgebildet. Die Spaltöffnung 118 erstreckt sich ausgehend von derjenigen Seite der Festlegehülse 106 aus, die dem der Stirnseite 114 der Kanalhülse 90 nächstliegenden Bereich der Trennwand 22 benachbart ist, bis zu der Längsachse 28 der Filtervorrichtung in die Festlegehülse 106 hinein. Die eine Seite 120 der Spaltöffnung 118 ist durch Teile der anderen Wandfläche 26 der Trennwand 22 und die andere Seite 122 der Spaltöffnung 118 ist durch eine der Trennwand 22 zugewandte teilringförmige weitere Stirnseite 124 der Festlegehülse 106 gebildet. Die weitere Stirnseite 124 der Festlegehülse 106 ist parallel zu der Stirnseite 116 der Festlegehülse 106 und senkrecht zu der Längsachse 28 der Filtervorrichtung ausgerichtet.

Der Grund der keilförmig verlaufenden Spaltöffnung 118 bzw. des Ausschnitts ist durch zwei Wandteile 126 der zylindrischen Festlegehülse 106 gebildet, die sich jeweils zwischen der Trennwand 22 und der weiteren Stirnseite 124 der Festlegehülse 106 in Richtung der Längsachse 28 der Filtervorrichtung erstrecken.

Wie Fig. 3 zeigt, ist auf der dem Filterelement 16 abgewandten Seite der Trennwand 22 und auf der der maximalen Spaltöffnung 118 gegenüberliegenden Seite der Festlegehülse 106 eine Erweiterung 128 des Außenumfangs der Festlegehülse 106 vorgesehen. Die Erweiterung 128 des Außenumfangs der Festlegehülse 106 ist in der Art eines Vorsprungs 130 als einstückiger Bestandteil der Festlegehülse 106 und der Trennwand 22 ausgebildet. Die Stirnseite 132 des Vorsprungs 130 ist mit der Innenseite des Bodens 76 des Filtergehäusekopfes 38 in Anlage bringbar. Durch den Vorsprung 130 erstrecken sich in Richtung der Längsachse 28 des Filtergehäuses 10 parallel zueinander ein Durchgang 134 für ein Festlegemittel 146 und ein Messkanal 136 zum Weiterleiten von Fluiddruck. Der Durchgang 134 für das Festlegemittel 146 und der Messkanal 136 münden jeweils auf der dem Filterelement 16 zugewandten Seite 24 der Trennwand 22 aus der Trennwand 22 aus und auf der dem Filterelement 16 abgewandten Seite bündig mit der Stirnseite 116 der Festlegehülse 106 aus dem Vorsprung 130 aus. Der Messkanal 136 ist in Radialrichtung gesehen zwischen dem Fluidkanal 30 und dem Durchgang 134 für das Festlegemittel 146 angeordnet.

Der Messkanal 136 erstreckt sich weiterhin ausgehend von der Innenseite des Bodens 76 des Filtergehäusekopfes 38 durch den Filtergehäusekopf 38 zu einem zentralen, zylindrischen Durchgang 138 des Filtergehäusekopfes 38 hin, der zumindest teilweise durch den Hohlstutzen 108 begrenzt ist. Der sich durch den Filtergehäusekopf 38 erstreckende Teil des Messkanals 136 ist an seinem der Strömungsleiteinrichtung 20 zugewandten Ende zur Aufnahme eines Dichtringes 140 im Durchmesser erweitert.

In den zentralen Durchgang 138 des Filtergehäusekopfes 38 ist ein zylindrischer Differenzdrucksensor 142 für eine Differenzdruckmessung eingesetzt, der mit dem aus dem Filtergehäusekopf 38 in den zentralen Durchgang 138 ausmündenden Messkanal 136 fluidführend verbindbar ist. An seinem der Strömungsleiteinrichtung 20 zugewandten Endbereich des Außenumfangs ist der Differenzdrucksensor 142 von dem Hohlstutzen 108 umfasst. Zur Abdichtung des Filtergehäusekopfes 38 gegenüber dem Differenzdrucksensor 142 ist der zentrale Durchgang 138 des Filtergehäusetopfes 38 an seinem dem Filterelement 16 abgewandten Ende zur Aufnahme eines Dichtringes 144 im Durchmesser erweitert.

Die Strömungsleiteinrichtung 20 ist mittels eines sich durch den Durchgang 134 der Strömungsleiteinrichtung 20 erstreckenden Festlegemittels 146 in Form einer Schraube 148 an der Innenseite des Bodens 76 des Filtergehäusekopfs 38 festgelegt.

## Patentansprüche

1. Filtervorrichtung mit einem Filtergehäuse (10), das eine Anschlussstelle (12) für die Zufuhr eines Unfiltratstroms und eine weitere Anschlussstelle (14) für die Abfuhr eines Filtratstroms aufweist, mit einem ein Filtermaterial (18) aufweisenden, hohlzylindrischen Filterelement (16), das zur Filtration des Unfiltratstroms zwischen die jeweiligen Anschlussstellen (12, 14) geschaltet ist, und mit einer Strömungsleiteinrichtung (20) für das Führen des Unfiltratstroms innerhalb des Filtergehäuses (10), wobei die Strömungsleiteinrichtung (20) auch dem Führen des Filtratstroms im Filtergehäuse (10) dient und eine Trennwand (22) aufweist, die mit ihren einander gegenüberliegenden Wandseiten (24, 26) unter Anströmung derselben dahingehend einmal den Unfiltrat- und einmal den Filtratstrom getrennt voneinander führt, und die von einem Fluidkanal (30) durchgriffen ist, der endseitig einmal in das Innere (32) des Filterelements (16) und einmal in Richtung einer der beiden Anschlussstellen (12, 14) ausmündet,
wobei die Strömungsleiteinrichtung (20) in einen Filterkopf (38) als eigenständiges Bauteil eingesetzt ist, der mit einem Filtertopf (42) mit dem austauschbaren Filterelement (16) in wieder lösbarer Weise verbunden ist,
wobei die Fluidanschlussstellen (12, 14) im Filterkopf (38) des Filtergehäuses (10) angeordnet, umlenkungsfrei in einen jeweils zuordenbaren Strömungsraum (82, 84) einmünden, die von der Strömungsleiteinrichtung (20) räumlich voneinander separiert sind, und
wobei das Filterelement (16) tauschbar in dem Filtertopf (42) des Filtergehäuses (10) aufgenommen ist, der in der Art eines abnehmbaren Deckelteils von dem Filterkopf (38) verschlossen ist,
**dadurch gekennzeichnet,**
**dass** der Fluidkanal (30) eine hohlzylindrische Kanalhülse (90) aufweist, die einstückiger Bestandteil der Trennwand (22) ist, die zusätzlich eine hohlzylindrische Festlegehülse (106) aufweist, mittels der die Trennwand (22) an Deckelteilen (76, 108) des Filterkopfes (38) festlegbar ist, in die die Festlegehülse (106) eingreift; und
**dass** eine Spaltöffnung (118) den Fluidkanal (30) mit einem der Strömungsräume (84) verbindet und als keilförmiger Ausschnitt der Festlegehülse (106) ausgebildet ist.

2. Filtervorrichtung nach Anspruch 1, **dadurch gekennzeichnet, dass** gegenüber der Strömungsrichtung in der jeweiligen Anschlussstelle (12, 14) die Trennwand (22) in der Art einer schiefen Ebene schräg geneigt ist, die mit ihren beiden einander gegenüberliegenden Wandteilen (24, 26), in der vertikalen Betriebsstellung gesehen, einmal von der Unterseite (24) und einmal von der Oberseite (26) her angeströmt ist.

3. Filtervorrichtung nach Anspruch 1 oder 2, **dadurch gekennzeichnet, dass** die schräggestellte Trennwand (22) an ihrem Außenumfang (80) eine Dichtung (88) trägt, die, in der vertikalen Betriebsstellung gesehen, einmal oberhalb der einen Anschlussstelle (12) und einmal unterhalb der anderen Anschlussstelle (14) verläuft.

4. Filtervorrichtung nach einem der vorstehenden Ansprüche, **dadurch gekennzeichnet, dass** die Anschlussstellen (12, 14) in einer gemeinsamen Ebene im Filterkopf (38) verlaufen und quer zum Fluidkanal (30) der Trennwand (22).

5. Filtervorrichtung nach einem der vorstehenden Ansprüche, **dadurch gekennzeichnet, dass** die Trennwand (22) die Festlegehülse (106 als einstückigen Bestandteil aufweist.

6. Filtervorrichtung nach einem der vorstehenden Ansprüche, **dadurch gekennzeichnet, dass** die Strömungsleiteinrichtung (20) zusätzliche Festlegemittel (134, 146) für eine Anbindung an das Kopfteil (38) aufweist und/oder Teile (136, 142) für eine Differenzdruckmessung, wie mindestens einen Messkanal (136), aufweist.

## Claims

1. Filter device having a filter housing (10), which comprises a connection point (12) for supplying a flow of unfiltered medium and a further connection point (14) for discharging a flow of filtrate, with a hollow cylindrical filter element (16) comprising a filter material (18), which is connected between the respective connection points (12, 14) for filtering the flow of unfiltered medium, and with a flow guidance device (20) for guiding the flow of unfiltered medium within the filter housing (10), wherein the flow guidance device (20) is also used to guide the flow of filtrate in the filter housing (10) and has a separating wall (22) which, with its mutually opposing wall sides (24, 26), guides the flow of unfiltered medium, on the one hand, and the flow of filtrate, on the other hand, separately from each other while flowing against said wall sides, and through which a fluid duct (30) passes, which opens out at the end into the interior (32) of the filter element (16), on the one hand, and towards one of the two connection points (12, 14), on the other hand,
wherein the flow guidance device (20) is inserted, as an independent component, in a filter head (38) which is connected in a releasable manner to a filter bowl (42) with the replaceable filter element (16),
wherein the fluid connection points (12, 14), arranged in the filter head (38) of the filter housing (10), open out without deflection into a respectively assignable flow chamber (82, 84), which flow chambers are spatially separated from each other by the flow guidance device (20), and
wherein the filter element (16) is replaceably accommodated in the filter bowl (42) of the filter housing (10), said filter bowl being closed by the filter head (38) in the manner of a removable cover part,
**characterised in that**
the fluid duct (30) has a hollow cylindrical duct sleeve (90), which is an integral part of the separating wall (22), which additionally has a hollow cylindrical retaining sleeve (106) by means of which the separating wall (22) can be fixed to cover parts (76, 108) of the filter head (38) in which the retaining sleeve (106) engages; and
**in that** a gap opening (118) connects the fluid duct (30) to one of the flow chambers (84) and is configured as a wedge-shaped cut-out of the retaining sleeve (106).

2. Filter device according to claim 1, **characterised in that**, counter to the flow direction in the respective connection point (12, 14), the separating wall (22) is obliquely inclined in the manner of a sloping plane which, with its two mutually opposing wall parts (24, 26), when viewed in the vertical operating position, is flowed against from the lower side (24), on the one hand, and from the upper side (26), on the other hand.

3. Filter device according to claim 1 or 2, **characterised in that** the inclined separating wall (22) bears on its outer circumference (80) a seal (88) which, when viewed in the vertical operating position, extends above the one connection point (12), on the one hand, and below the other connection point (14), on the other hand.

4. Filter device according to one of the preceding claims, **characterised in that** the connection points (12, 14) extend in a common plane in the filter head (38) and transverse to the fluid duct (30) of the separating wall (22).

5. Filter device according to one of the preceding claims, **characterised in that** the separating wall (22) comprises the retaining sleeve (106) as an integral component.

6. Filter device according to one of the preceding claims, **characterised in that** the flow guidance device (20) comprises additional retaining means (134, 146) for a connection to the head part (38) and/or parts (136, 142) for a differential pressure measurement, such as at least one measuring channel (136).

## Revendications

1. Dispositif de filtration comprenant une enveloppe (10) de filtre, qui a un point (12) de raccordement pour l'arrivée d'un courant de non filtrat et un autre point (14) de raccordement pour l'évacuation d'un courant de filtrat, comprenant un élément (16) de filtre cylindrique creux ayant une matière (18) filtrante qui, pour la filtration du courant de non filtrat, est monté entre les points (12, 14) de raccordement respectif et comprenant un dispositif (20) de conduite de l'écoulement pour la conduite du courant de non filtrat dans l'enveloppe (10) du filtre, dans lequel le dispositif (20) de conduite de l'écoulement sert également à la conduite du courant de filtrat dans l'enveloppe (10) du filtre et a une cloison (22) qui, par ses faces (24, 26) de parois opposées l'une à l'autre par écoulement contre elle, guide de manière séparée l'un de l'autre d'une part le courant de non filtrat et d'autre part le courant de filtrat et qui est traversée par un conduit (30) pour du fluide, qui débouche du côté de l'extrémité d'une part à l'intérieur (32) de l'élément (16) de filtre et d'autre part en direction de l'un des deux points (12, 14) de raccordement,
dans lequel le dispositif (20) de conduite de l'écoulement est inséré dans une tête (38) de filtre en tant que pièce autonome, qui est reliée d'une manière pouvant être redéfaite par un pot (42) de filtre à l'élément (16) de filtre remplaçable,
dans lequel les points (12, 14) de raccordement de fluide, disposés dans la tête (38) de filtre de l'enveloppe (10) du filtre, débouchent sans déviation dans un espace (82, 84) d'écoulement pouvant être associé respectivement, qui sont séparés l'un de l'autre dans l'espace par le dispositif (20) de conduite de l'écoulement, et
dans lequel l'élément (16) de filtre est reçu de manière remplaçable dans le pot (42) de filtre de l'enveloppe (10) de filtre, qui est fermé, à la manière d'une partie de couvercle pouvant être retiré, par la tête (38) du filtre,
**caractérisé**
**en ce que** le conduit (30) pour du fluide a un manchon (90) de conduit cylindrique creux, qui est partie constitutive d'une seule pièce de la cloison (22), qui a en outre un manchon (106) cylindrique creux de fixation, au moyen duquel la cloison (22) peut être fixée à des parties (76, 108) de couvercle de la tête (38) du filtre, dans lesquelles le manchon (106) de fixation pénètre ; et
**en ce qu'**une ouverture (118) en fente met le conduit (30) pour du fluide en communication avec l'un des espaces (84) d'écoulement et est constitué sous la forme d'une découpe cunéiforme du manchon (106) de fixation.

2. Dispositif de filtration suivant la revendication 1, **caractérisé en ce que**, par rapport à la direction d'écoulement au point (12, 14) de raccordement respectif, la cloison (22) est inclinée en oblique à la manière d'un plan incliné, qui par ses deux parties (24, 26) de paroi opposées l'une à l'autre, considéré dans la position verticale de fonctionnement, est parcourue en écoulement d'une part par le côté (24) inférieur et d'autre part à partir du côté (26) supérieur.

3. Dispositif de filtration suivant la revendication 1 ou 2, **caractérisé en ce que** la cloison (22) inclinée porte sur son pourtour (80) extérieur une garniture (88) d'étanchéité qui, considéré dans la position verticale de fonctionnement, s'étend d'une part au-dessus de l'un des points (12) de raccordement et d'autre part en-dessous de l'autre point (14) de raccordement.

4. Dispositif de filtration suivant l'une des revendications précédentes, **caractérisé en ce que** les points (12, 14) de raccordement s'étendent dans la tête (38) du filtre dans un plan commun et transversalement au conduit (30) pour du fluide de la cloison (22).

5. Dispositif de filtration suivant l'une des revendications précédentes, **caractérisé en ce que** la cloison (22) a le manchon (106) de fixation comme partie constitutive d'une seule pièce.

6. Dispositif de filtration suivant l'une des revendications précédentes, **caractérisé en ce que** le dispositif (20) de conduite de l'écoulement a en outre des moyens (134, 146) de fixation pour une liaison à la partie (38) de tête et/ou à des parties (136, 142) pour la mesure d'une différence de pression, comme au moins un conduit (136) de mesure.
